# EUROPÄISCHE PATENTSCHRIFT

(11) **EP 3 436 375 B1**
(45) Veröffentlichungstag und Bekanntmachung des Hinweises auf die Patenterteilung: **15.07.2026**
(21) Anmeldenummer: 16815789.9
(22) Anmeldetag: 13.12.2016
(51) Int. Cl.: B65G 47/71, B65G 47/76, B65G 47/82

(54) **NIEDERDRUCK-SPEICHERVORRICHTUNG UND/ODER VERTEILEINHEIT FÜR BEHÄLTER**
LOW-PRESSURE STORAGE DEVICE AND/OR DISTRIBUTION UNIT FOR CONTAINERS
DISPOSITIF DE STOCKAGE À BASSE PRESSION ET/OU UNITÉ DE DISTRIBUTION POUR RÉCIPIENTS

(30) Priorität: 31.03.2016 DE 102016205304
(43) Veröffentlichungstag der Anmeldung: 06.02.2019
(73) Patentinhaber: Krones AG, 93073 Neutraubling (DE)
(72) Erfinder: SEGER, Martin, 93073 Neutraubling (DE)
(74) Vertreter: Grünecker Patent- und Rechtsanwälte PartG mbB
(86) Internationale Anmeldenummer: PCT/EP2016/080764
(87) Internationale Veröffentlichungsnummer: WO 2017/167414

(56) Entgegenhaltungen:
- EP-B1- 1 144 285
- DE-A1- 19 514 928
- DE-A1- 2 727 277
- DE-A1- 3 623 250
- DE-B- 1 244 644
- GB-A- 1 002 117
- JP-A- 2002 160 822
- JP-A- 2014 024 558
- JP-U- S6 047 726
- KR-B1- 101 287 160
- US-A- 4 054 199
- US-A- 4 889 225
- US-A1- 2009 229 952
- US-A1- 2014 001 008
- US-B1- 6 206 174

## Beschreibung

Die Erfindung betrifft eine Niederdruck-Speichervorrichtung und/oder Verteileinheit für Behälter gemäß Oberbegriff des Anspruchs 1.

Niederdruck-Speichervorrichtungen und Verteileinheiten werden in Abfüllanlagen für Behälter bekanntermaßen zwischen Behandlungsmaschinen verwendet, um einen störungsfreien Produktionsablauf aufrechtzuerhalten, wenn zugehörigen Maschinenleistungen voneinander abweichen und/oder schwanken. Ferner können Niederdruck-Speichervorrichtungen kurzfristige Unterbrechungen des Zustroms und/oder des Abtransports der Behälter kompensieren.

Niederdruck-Speichervorrichtungen, die definitionsgemäß für einen niedrigen Staudruck zwischen transportierten und gespeicherten Behältern ausgelegt sind, sind beispielsweise in der DE 102 30 335 A1, der EP 2 008 952 A1 und der EP 1 144 285 B1 beschrieben. Zur Regelung derartiger Niederdruck-Speichervorrichtungen in Abhängigkeit von einem Füllzustand mit Behältern sind beispielsweise aus der EP 2 363 359 mechanische Stauschalter bekannt, die bei einem Rückstau von anliegenden Behältern betätigt werden.

Besonders bewährt hat sich der aus der EP 1 1444 285 B1 bekannte Speichertisch, bei dem Durchlaufbänder zum Fördern der Behälter durch den Speichertisch vorhanden sind, sowie Speicherbänder, die beidseitig entlang der Durchlaufbänder verlaufen und langsamer antreibbar sind als die Durchlaufbänder. Bei diesem Speichertisch ist zudem wenigstens ein Zuförderband im Einlaufbereich ausgebildet, das parallel zu den Durchlaufbändern und den Speicherbändern verläuft oder von wenigstens einem der Durchlaufbänder gebildet wird.

Es ist jedoch erforderlich, die zugeförderten Behälter im Einlaufbereich auf die Durchlaufbänder geeignet zu verteilen. Dies erfordert gegebenenfalls steuerbare Umlenkeinrichtungen und erlaubt nur einen vergleichsweise langsamen Antransport der Behälter, um ein Umfallen der Behälter zu vermeiden. Außerdem wird dann für die Verteilung der Behälter auf die einzelnen Durchlaufbänder ein vergleichsweise großer Flächenanteil des Speichertisches belegt. Somit steigt entweder der Platzbedarf für die Niederdruck-Speichervorrichtung, oder die Kapazität der Niederdruck-Speichervorrichtung muss für die Verteilung entsprechend reduziert werden.

Aus der EP 0 722 896 B1 ist zudem ein Förderband mit sogenannten Freeflow-Platten bekannt, das quer zu einem Endlosförderband angeordnet werden kann. Zu diesem Zweck greifen die Freeflow-Platten seitlich über einen Umkehrbereich des Endlosförderbands über und fluchten mit der Transportfläche des Endlosförderbands. Dies ermöglicht einen Richtungswechsel transportierter Behälter mit geringer Gefahr des Umfallens am Übergang vom Freeflow-Förderband zum Endlosförderband. Die GB1002117A offenbart die Merkmale des Oberbegriffs des Anspruchs 1.

Es besteht weiterhin Bedarf für eine Niederdruck-Speichervorrichtung, bei der der Einlaufbereich eine Verteilung der Behälter auf Durchlaufbänder bei gleichzeitig geringem Platzbedarf und hoher Einlaufgeschwindigkeit ermöglicht und/oder bei der sich ein einlaufender Behälterstrom unter Niederdruckbedingungen kontrolliert auf wenigstens zwei auslaufende Behälterströme verteilen lässt.

Die gestellte Aufgabe wird mit einer Niederdruck-Speichervorrichtung und/oder Verteileinheit gemäß Anspruch 1 gelöst. Demnach eignet sich diese zum Speichern und/oder Verteilen von Behältern, insbesondere von Flaschen. Die erfindungsgemäße Niederdruck-Speichervorrichtung und/oder Verteileinheit umfasst einen Speichertisch mit Durchlaufbändern zum Fördern der Behälter durch den Speichertisch und mit Speicherbändern, die beidseitig entlang der Durchlaufbänder verlaufen und langsamer antreibbar sind als die Durchlaufbänder. Ferner umfasst die Niederdruck-Speichervorrichtung einen Einlaufbereich mit einem Zuförderband für die Behälter. Erfindungsgemäß verläuft das Zuförderband quer, insbesondere im rechten Winkel, zu den Durchlaufbändern und den Speicherbändern. Erfindungsgemäß ist zwischen Zuförderband und Speichertisch ein zum Zuförderband gegenläufiges Transferband ausgebildet. Außerdem ist im Einlaufbereich wenigstens ein Ablenkelement zum Ablenken der Behälter vom Zuförderband zum Speichertisch ausgebildet. Das Ablenkelement ist dann vorzugsweise so ausgebildet, dass die Behälter über das Transferband auf den Speichertisch abgelenkt werden, insbesondere selektiv auf die Durchlaufbänder.

Das gegenläufige Transferband ermöglicht gemeinsam mit dem wenigstens einen Ablenkelement eine hohe Einlaufgeschwindigkeit und einen kontinuierlichen Weitertransport der Behälter auf den Speichertisch unter Niederdruck-Bedingungen. Aufgrund des quer zu den Durchlaufbändern und den Speicherbändern verlaufenden Zuförderbands kann der Einlaufbereich besonders kompakt ausgebildet werden. Die Verteilung der Behälter auf einzelne Durchlaufbahnen erfolgt im Wesentlichen an der Stirnseite des Speichertisches noch innerhalb des Einlaufbereichs. Der Platzbedarf für die Verteilung der Behälter auf die einzelnen Durchlaufbänder beschränkt sich daher im Wesentlichen auf die Breite des Zuförderbands und Transferbands.

Die Speicherkapazität von Niederdruck-Speichervorrichtungen ist in der Regel aus Kostengründen an den tatsächlichen Bedarf in einer Produktionsanlage, wie beispielsweise einer Behälterbehandlungsanlage und insbesondere einer Behälterabfüllanlage, angepasst und wird gegebenenfalls durch Verkürzung der Speicherbänder und Durchlaufbänder derart minimiert, dass die Speicherbänder nur noch als Bremsbänder wirken, um den zugeordneten Behälterauslauf nicht mit einem Überangebot an Behältern zu beschicken. Im Sinne der vorliegenden Erfindung können die Speicherbänder daher auch als Bremsbänder oder als Speicher- und Bremsbänder verstanden werden. Aus der Konfiguration des jeweiligen Speichertisches und Auslaufbereichs kann sich daraus funktional eine druckarme oder drucklose Verteileinheit ergeben.

Eine erfindungsgemäße Verteileinheit kann demnach den beschriebenen Speichertisch der Niederdruck-Speichervorrichtung umfassen und ist so konfiguriert, dass die Behälter nicht zwischengespeichert werden, sondern von einem Einlass auf wenigstens zwei Ausläufe verteilt werden. Bei dieser Konfiguration entspricht die Anzahl der insgesamt zugeführten Behälter im Wesentlichen der Anzahl der insgesamt abgeführten Behälter.

Die Verteileinheit ist dann beispielsweise derart konfiguriert, dass die zugeführten Behälter auf die jeweils arbeitenden Behälterausläufe verteilt werden können. Kann beispielsweise einer von zwei vorhandenen Behälterausläufen aufgrund eines Maschinenstillstands stromabwärts nicht beschickt werden, so muss in diesem Fall der verbleibende Auslauf alle zugeführten Behälter abtransportieren können.

Stromabwärts der Niederdruck-Speichervorrichtung und/oder Verteileinheit, insbesondere im Anschluss daran, ist vorzugsweise ein Förderer für den Weitertransport der Behälter angeordnet. Dessen Transportbänder sind insbesondere parallel oder orthogonal zu denen der Niederdruck-Speichervorrichtung und/oder Verteileinheit angeordnet.

Das Zuförderband und das Transferband sind vorzugsweise unabhängig voneinander angetrieben. Dadurch lässt sich die Umlenkung der Behälter flexibel steuern. Es ist jedoch auch denkbar, dass das Transferband mittelbar durch das Zuförderband bzw. dessen Antriebsmotor angetrieben wird. Hierfür müssen geeignete Mittel zur Kraftübertragung eingesetzt werden. In diesem Zusammenhang ist auch eine Übersetzung des Drehmoments mittels Getriebe denkbar. Weiter können Mittel vorgesehen sein, um das vom Zuförderband bereitgestellte Drehmoment umzukehren und das Transferband somit gegenläufig anzutreiben.

Die Anzahl der Speicherbänder ist vorzugsweise höher als die Anzahl der Durchlaufbänder.

Vorzugsweise beträgt die Geschwindigkeit der Speicherbänder (Speichergeschwindigkeit) und/oder der Durchlaufbänder (Durchlaufgeschwindigkeit) höchstens 20 m/min, insbesondere höchstens 15 m/min. Vorzugsweise beträgt die Geschwindigkeit des Zuförderbands (Zufördergeschwindigkeit) höchstens 20 m/min, insbesondere höchstens 15 m/min.

Vorzugsweise ist das Transferband über einen Umkehrbereich der Durchlaufbänder und Speicherbänder übergreifend und auf seiner Oberseite mit dem Speichertisch horizontal fluchtend ausgebildet und insbesondere als Transportkette. Eine derartige Transportkette wird auch als Freeflow-Kette bezeichnet. Das Transferband ist beispielsweise eine Mattenkette, welche vorzugsweise aus Kunststoff ist, mit seitlichen Freeflow-Platten, die den Durchlaufbändern und den Speicherbändern zugewandt sind.

Die Kontur der Freeflow-Platten ist auf deren Unterseite vorzugsweise an einen äußeren Umkehrradius der Durchlaufbänder und der Speicherbänder angepasst. Im einlaufseitigen Umkehrbereich der Durchlaufbänder und Speicherbänder laufen diese endlos über Umlenkrollen oder dergleichen. Folglich lässt sich ein von den Behältern zu überquerender Spalt zwischen dem Transferband und den Durchlaufbändern minimieren. Transferband und Speichertisch bilden dann eine Überschubfläche aus. Zwischen Transferband und Speichertisch ist dann in der Überschubfläche ein Spalt von höchstens 10 mm, insbesondere höchstens 5 mm, mittlerer Breite ausgebildet. Zu beiden Seiten des Spalts sind dann im Wesentlichen miteinander fluchtende Überschubflächen ausgebildet.

Vorzugsweise umfasst der Speichertisch wenigstens zwei Durchlaufbänder und besonders bevorzugt wenigstens drei Durchlaufbänder sowie diese beidseitig flankierende Speicherbänder. Damit lässt sich eine besonders gleichmäßige Verteilung der Behälter in Querrichtung auf mehrere Speicherbänder erzielen und somit eine effiziente Ausnutzung der Speicherfläche. Die Speicherbänder sorgen hierbei für eine gleichmäßige Verteilung der Behälter bei Niederdruck-Speicherbedingungen.

Vorzugsweise ist der Speichertisch breiter als das Zuförderband, insbesondere um einen Faktor von 1,5 bis 5, und besonders bevorzugt um einen Faktor 3 bis 4. Dadurch lässt sich ein Normalbetrieb unter Niederdruck-Bedingungen auch bei maximaler Zuförderleistung dauerhaft aufrecht erhalten.

Vorzugsweise ist das Ablenkelement als Geländer ausgebildet, das ist in Förderrichtung des Zuförderbands gesehen schräg zum Speichertisch hin verläuft. In Kombination mit dem gegenläufigen Transferband ermöglicht dies eine gleichmäßige Verteilung der Behälter über die gesamte Breite des Speichertisches.

Vorzugsweise ist das Ablenkelement als Geländer ausgebildet, das abwechselnd in Leitabschnitte und davon abweichend ausgerichtete Ablenkabschnitte derart unterteilt ist, dass die Ablenkabschnitte die Behälter vorrangig in Richtung der Durchlaufbänder ablenken und die Leitabschnitte die Behälter vorrangig an den Speicherbändern vorbeileiten. Dies ermöglicht eine besonders effiziente Ausnutzung der Durchlaufbänder unter gleichzeitiger Aufrechterhaltung eines Niederdruck-Speicherbetriebs unter Zuhilfenahme der die Durchlaufbänder flankierenden Speicherbänder.

Vorzugsweise weisen die Ablenkabschnitte seitlich Ablenkflächen auf, die mit der Förderrichtung des Zuförderbands einen größeren spitzen Winkel einschließen als die Leitabschnitte. Die Leitabschnitte können zu diesem Zweck beispielsweise parallel zum Zuförderband verlaufen. Die Ablenkabschnitte ermöglichen somit eine selektive seitliche Ablenkung durch eine stärkere Schrägstellung bezüglich der Förderrichtung des Zuförderbands als die Leitabschnitte. Folglich werden die Behälter im Bereich der Leitabschnitte in geringerem Ausmaß seitlich abgelenkt, so dass sie an den Speicherbändern vorbeilaufen.

Vorzugsweise wechseln sich die Ablenkabschnitte und die Leitabschnitte im Wesentlichen stufenförmig ab. Das Ablenkelement ist dann insbesondere als stufenförmiges Geländer ausgebildet. Das Geländer verläuft dann beispielsweise im Zickzack. Es wechseln sich somit bezüglich der Förderrichtung des Zuförderbands stärker schräggestellte Ablenkabschnitte mit bezüglich der Förderrichtung des Zuförderbands weniger stark schräggestellten Leitabschnitten ab.

Die Ablenkabschnitte schließen mit der Förderrichtung des Zuförderbands beispielsweise einen Winkel von 15 bis 45° ein, die Leitabschnitte einen Winkel von 0 bis 15°. Damit lassen sich die Behälter auf einfache Weise zielgerichtet auf die Durchlaufbänder verteilen.

Alternativ können sich die Ablenkabschnitte und Leitabschnitte wellenförmig abwechseln. Durch geeignete Positionierung von Wellenbergen und Wellentälern bezüglich der Durchlaufbänder und der Speicherbänder lassen sich im Wesentlichen dieselben Vorteile erzielen wie mit stufenförmig ausgebildeten Ablenkelementen.

Vorzugsweise ist im Einlaufbereich wenigstens ein aktiv steuerbares Ablenkelement ausgebildet, das einem der Durchlaufbänder zugeordnet ist, und mit dem sich die Behälter selektiv vom Zuförderband in einer Richtung auf das zugeordnete Durchlaufband zu schieben lassen. Derartige Ablenkelemente sind beispielsweise Schieber oder Hebel, wie beispielsweise schwenkbare Führungsgeländer. Aktiv steuerbare Ablenkelemente lassen sich mit feststehenden Ablenkelementen kombinieren, wie beispielsweise mit Ablenkelementen, bei denen sich Ablenkabschnitte und Leitabschnitte abwechseln.

Vorzugsweise sind im Einlaufbereich wenigstens zwei aktiv steuerbare Ablenkelemente unterschiedlichen Durchlaufbändern zugeordnet, wobei Arbeitshübe der Ablenkelemente individuell einstellbar sind. Damit lassen sich die Behälter in Abhängigkeit von einer an dem jeweiligen Ablenkelement vorhandenen Produktstromdichte und/oder der Belegung zugeordneter Durchlaufbänder gezielt auf einzelne Durchlaufbänder verteilen.

Vorzugsweise sind ein gemeinsamer Antriebsmotor für die Durchlaufbänder und ein gemeinsamer Antriebsmotor für die Speicherbänder vorhanden. Damit lassen sich die Durchlaufbänder gemeinsam mit einer vorgegebenen ersten Geschwindigkeit und die Speicherbänder gemeinsam mit einer zweiten demgegenüber niedrigeren Geschwindigkeit antreiben. Dies ermöglicht eine konstruktiv einfache Steuerung der Durchlaufbänder und der Speicherbänder.

Vorzugsweise ist die Fördergeschwindigkeit der Durchlaufbänder und/oder der Speicherbänder variabel steuerbar. Damit lässt sich die Belegung des Speichertisches flexibel an unterschiedliche Produktionsbedingungen anpassen. Die Niederdruck-Speichervorrichtung lässt sich auf diese Weise an unterschiedliche Betriebszustände anpassen wie beispielsweise an einen Normalbetrieb, an ein Einspeichern von Behältern im Sinne einer Zunahme der Behälteranzahl auf dem Speichertisch, und an ein Ausspeichern der Behälter, im Sinne einer Reduzierung der auf dem Speichertisch vorhandenen Behälter.

Vorzugsweise ist der Speichertisch, insbesondere in einem eingangsseitigen Drittel (beispielsweise bezogen auf die Speicherfläche), quer bezüglich der Durchlaufbänder hindernislos ausgebildet. Dadurch lässt sich die Fläche des Speichertisches flexibel für das Speichern der Behälter bei unterschiedlichen Betriebsbedingungen verwenden.

Vorzugsweise umfasst die Niederdruck-Speichervorrichtung und/oder Verteileinheit ferner einen Auslaufbereich für die Behälter. In besonders bevorzugten Ausführungsbeispielen umfasst der Auslaufbereich wenigstens zwei Auslässe, durch die sich die Behälter als voneinander getrennte Behälterströme aus der Niederdruck-Speichervorrichtung und/oder Verteileinheit abtransportieren lassen. Dies ermöglicht eine Aufteilung und Anpassung der Behälterströme unter Niederdruckbedingungen an stromabwärts liegende Behandlungsmaschinen. Insbesondere können die Niederdruckbedingungen für den Behältereinlauf und die Verteilung auf Behälterströme kontrollierbar eingehalten werden. An jedem Auslass ist beispielsweise wenigstens ein separates Abförderband oder dergleichen für den zugeordneten Behälterstrom ausgebildet.

Vorzugsweise umfasst der Speichertisch den Auslässen zugeordnete Speicherbereiche mit jeweils wenigstens einem Durchlaufband und Speicherbändern sowie wenigstens ein ausgangsseitiges Ablenkelement zum Aufteilen eines einlaufenden Behälterstroms auf auslaufende Behälterströme. Dies ermöglicht einen an die vorgegebenen Anteile der Behälterströme angepassten Transport der Behälter auf dem Speichertisch und eine apparativ einfache Verteilung der Behälterströme.

Vorzugsweise ist für jeden Auslass wenigstens ein separater Antriebsmotor zum Antreiben der dem Auslass jeweils zugeordneten Speicherbänder ausgebildet. Dadurch können die Behälterströme durch die einzelnen Auslässe bedarfsgerecht und individuell eingestellt werden. Die Auslässe können unabhängig voneinander beschickt werden.

Vorzugsweise ist für wenigstens zwei Auslässe ein gemeinsamer Antriebsmotor zum Antreiben der den Auslässen jeweils zugeordneten Durchlaufbänder ausgebildet. Dies vereinfacht den Transport der Behälter auf den Durchlaufbändern.

Vorzugsweise ist zwischen wenigstens zwei der Auslässe ein Förderband insbesondere mittels eines Behälterüberschubs zwischengeschaltet, wobei das Förderband quer, insbesondere im rechten Winkel, zu stromabwärts davon angeordneten Durchlaufbändern und Speicherbändern verläuft,
wobei zwischen dem Förderband (9') und den stromabwärts angeordneten Durchlaufbändern und Speicherbändern ein zum Förderband gegenläufiges Transferband ausgebildet ist, und
wenigstens ein Ablenkelement zum Ablenken der Behälter vom Förderband auf die stromabwärts angeordneten Durchlaufbänder ausgebildet ist.

Dies ermöglicht eine besonders effektive Kontrolle der Niederdruckbedingungen unter gezielter Aufteilung des einlaufenden Behälterstroms.

Bevorzugte Ausführungsformen der erfindungsgemäßen Niederdruck-Speichervorrichtung und/oder Verteileinheit sind in den Zeichnungen dargestellt. Es zeigen:
- Figur 1: eine Draufsicht auf eine erste Ausführungsform der Niederdruck-Speichervorrichtung und/oder Verteileinheit;
- Figur 2: den Einlaufbereich einer zweiten Ausführungsform der Niederdruck-Speichervorrichtung und/oder Verteileinheit;
- Figur 3: den Einlaufbereich einer dritten Ausführungsform der Niederdruck-Speichervorrichtung und/oder Verteileinheit;
- Figur 4: den Einlaufbereich einer vierten Ausführungsform der Niederdruck-Speichervorrichtung und/oder Verteileinheit;
- Figur 5: den Querschnitt des Einlaufbereichs der Niederdruck-Speichervorrichtung und/oder Verteileinheit;
- Figur 6: eine Draufsicht auf eine fünfte Ausführungsform der Niederdruck-Speichervorrichtung und/oder Verteileinheit;
- Figur 7: eine Draufsicht auf eine sechste Ausführungsform der Niederdruck-Speichervorrichtung und/oder Verteileinheit;
- Figur 8: eine Draufsicht auf eine siebte Ausführungsform der Niederdruck-Speichervorrichtung und/oder Verteileinheit; und
- Figur 9: eine Draufsicht auf eine achte Ausführungsform der Niederdruck-Speichervorrichtung und/oder Verteileinheit.

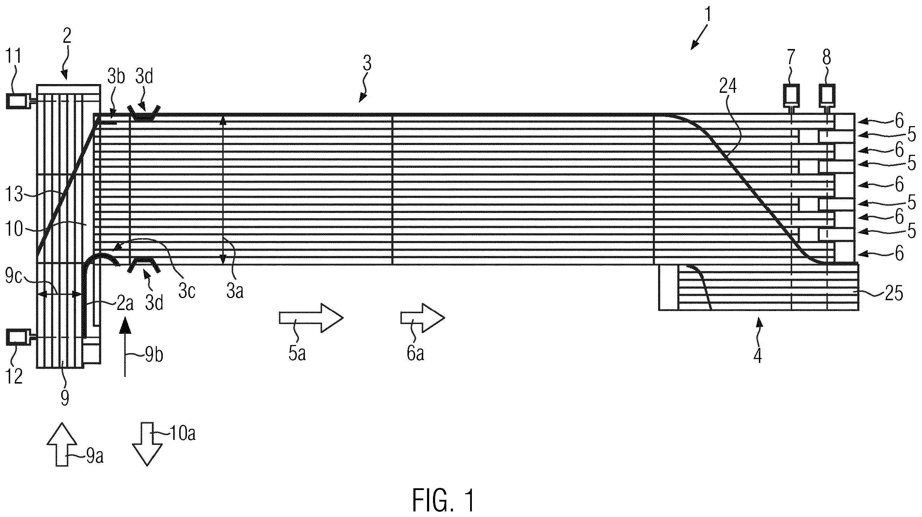

Wie die Figur 1 erkennen lässt, umfasst die Niederdruck-Speichervorrichtung und/oder Verteileinheit 1 in einer ersten Ausführungsform einen Einlaufbereich 2, einen Speichertisch 3 und einen Auslaufbereich 4. Der Speichertisch 3 umfasst Durchlaufbänder 5 und Speicherbänder 6. Die Durchlaufbänder 5 und die Speicherbänder 6 sind vorzugsweise derart nebeneinander ausgebildet, dass jedes Durchlaufband 5 beidseitig von einem Speicherband 6 flankiert ist.

Für die Durchlaufbänder 5 ist ein gemeinsamer Antriebsmotor 7 vorhanden, für die Speicherbänder 6 ein gemeinsamer Antriebsmotor 8. Die Antriebsmotoren 7, 8 sind vorzugsweise unabhängig voneinander steuerbar, so dass die Durchlaufgeschwindigkeiten 5a der Durchlaufbänder 5 und die Speichergeschwindigkeiten 6a der Speicherbänder 6 unabhängig voneinander auf unterschiedliche Werte eingestellt werden können. Im Normalbetrieb ist die Speichergeschwindigkeit 6a niedriger als die Durchlaufgeschwindigkeit 5a.

Wie die Figur 1 erkennen lässt, können die Durchlaufbänder 5 und Speicherbänder 6 unterschiedlich breit sein und/oder aus mehreren benachbarten und gemeinsam angetriebenen Bändern zusammengesetzt sein.

Der Einlaufbereich 2 umfasst ein vorzugsweise orthogonal zu den Durchlaufbändern 5 und Speicherbändern 6 verlaufendes Zuförderband 9 und ein zum Zuförderband 9 gegenläufiges Transferband 10. Zuförderband 9 und Transferband 10 könnten auch anderweitig quer zu den Durchlaufbändern 5 und den Speicherbändern 6 verlaufen, sofern zwischen Einlaufbereich 2 und Speichertisch 3 an deren relative Winkelstellung angepasste Überschubplatten oder dergleichen ausgebildet wären (nicht dargestellt).

Für das Zuförderband 9 ist ein Antriebsmotor 11 vorhanden und für das Transferband 10 ein separater Antriebsmotor 12. Die Antriebsmotoren 11, 12 lassen sich getrennt voneinander steuern, um eine Zufördergeschwindigkeit 9a des Zuförderbands 9 und eine Gegenlaufgeschwindigkeit 10a des Transferbands 10 einzustellen. Vorzugsweise werden Zufördergeschwindigkeit 9a und Gegenlaufgeschwindigkeit 10a so eingestellt, dass eine Beschickung des Speichertisches 3 im Wesentlichen über die gesamte Breite 3a erfolgt.

Der Einlaufbereich 2 umfasst ferner ein schienenförmiges Ablenkelement 13, das in Zuförderrichtung 9b gesehen schräg auf den Speichertisch 3 zu verläuft. Das Ablenkelement 13 ist beispielsweise ein geradliniges oder seitlich gekrümmtes Geländer. Das Ablenkelement 13 erstreckt sich vorzugsweise über die gesamte Breite 3a des Speichertisches 3.

Die Breite 3a des Speichertisches 3 ist vorzugsweise um einen Faktor 1,5 bis 5, und besonders bevorzugt um einen Faktor 3 bis 4, größer als die Breite 9c des Zuförderbands 9. Dadurch lässt sich auch bei Vollauslastung der Niederdruck-Speichervorrichtung und/oder Verteileinheit 1 eine gleichmäßige Beschickung des Speichertisches 3 unter Niederdruck-Speicherbedingungen gewährleisten.

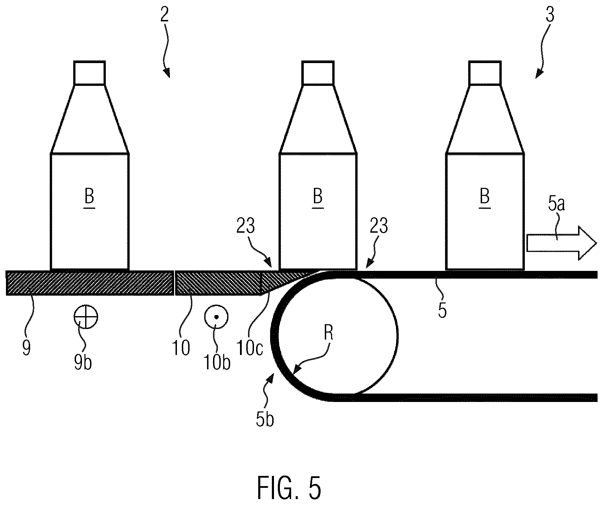

Am Übergang vom Einlaufbereich 2 zum Speichertisch 3 ist vorzugsweise wenigstens ein Abweiselement 3b, 3c für (in der Figur 5 dargestellte) Behälter B in Form von Geländern oder dergleichen ausgebildet, um ein Auslösen von an dem Speichertisch 3 ausgebildeten mechanischen Stauschaltern 3d beim normalen Transportieren und Überführen der Behälter B auf den Speichertisch zu vermeiden. Bestimmungsgemäß soll ein Stauschalter 3d nur bei einem Rückstau von Behältern B auf dem Speichertisch 3 durch einen an dem Stauschalter 3d anliegenden Behälter B ausgelöst werden.

Das Abweiselement 3b kann beispielsweise Bestandteil des Ablenkelements 13 bzw. eines Ablenkelements gemäß einer der nachfolgend beschriebenen Ausführungsformen sein oder daran anschließen. Das Abweiselement 3c kann beispielsweise Bestandteil eines seitliches Führungsgeländers 2a sein oder daran anschließen. Das Führungsgeländer 2a ist dann beispielsweise entlang des Zuförderbands 9 zur Abgrenzung vom Transferband 10 ausgebildet. Das Abweiselement 3c ist vorzugsweise als seitlich über den Speichertisch 3 übergreifende Überwölbung ausgebildet, wie in der Figur 1 schematisch angedeutet ist.

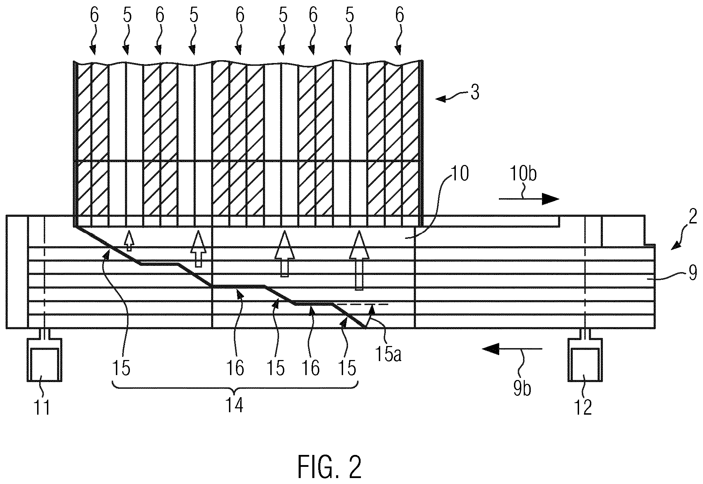

Die Figur 2 verdeutlicht den Einlaufbereich 2 einer zweiten Ausführungsform, die sich von der Ausführungsform der Figur 1 nur durch ein abweichend davon ausgebildetes Ablenkelement 14 unterscheidet. Demnach ist dieses im Wesentlichen stufenförmig ausgebildet bzw. verläuft im Zickzack.

Das Ablenkelement 14 umfasst vorzugsweise einander in Zuförderrichtung 9b abwechselnde Ablenkabschnitte 15 und Leitabschnitte 16. Die Ablenkabschnitte 15 schließen mit der Zuförderrichtung 9b einen Winkel 15a ein. Der Winkel 15a beträgt für die Ablenkabschnitte 15 beispielsweise 15 bis 45°. Die Leitabschnitte 16 schließen mit der Zuförderrichtung 9b einen entsprechenden Winkel ein, der beispielsweise 0 bis 15° beträgt.

An den Ablenkabschnitten 15 werden zugeförderte Behälter selektiv in Richtung der Durchlaufbänder 5 abgelenkt. Dies ist in der Figur 2 schematisch durch Blockpfeile angedeutet. Die Leitabschnitte 16 sind demgegenüber so ausgebildet, dass die zugeförderten Behälter selektiv an den Speicherbändern 6 vorbeilaufen und beispielsweise von dem in Zuförderrichtung 9b nachfolgenden Ablenkabschnitt 15 auf eine zugeordnete Durchlaufbahn 5 abgelenkt werden.

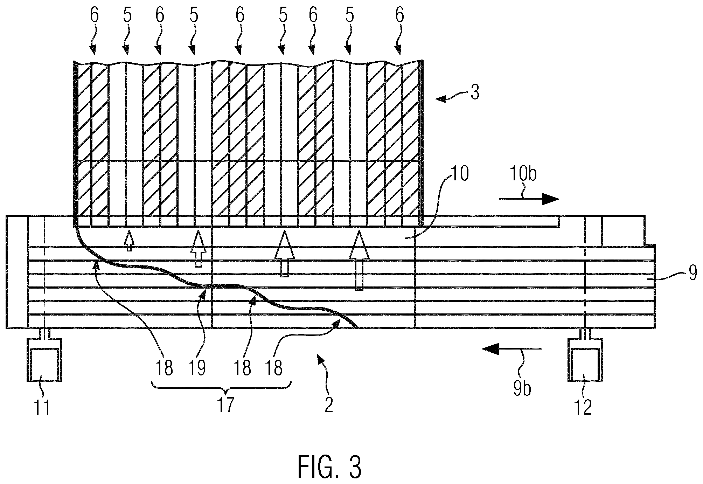

Die Figur 3 zeigt den Einlaufbereich 2 einer dritten Ausführungsform, die sich von der Ausführungsform der Figur 1 wiederum nur durch ein Ablenkelement 17 unterscheidet. Dies ist funktional im Wesentlichen dem Ablenkelement 14 entsprechend wellenförmig in Ablenkabschnitte 18 und Leitabschnitte 19 segmentiert. Auch in diesem Fall werden zugeförderte Behälter an den Ablenkabschnitten 18 selektiv in Richtung der Durchlaufbänder 5 abgelenkt (durch Blockpfeile symbolisiert). Entsprechend leiten die Leitabschnitte 19 die Behälter selektiv an den Speicherbändern 6 vorbei.

Die in den Figuren 1 bis 3 dargestellten Ablenkelemente 13, 14, 17 sind im Wesentlichen als im Arbeitsbetrieb unbewegliche Geländer oder dergleichen ausgebildet.

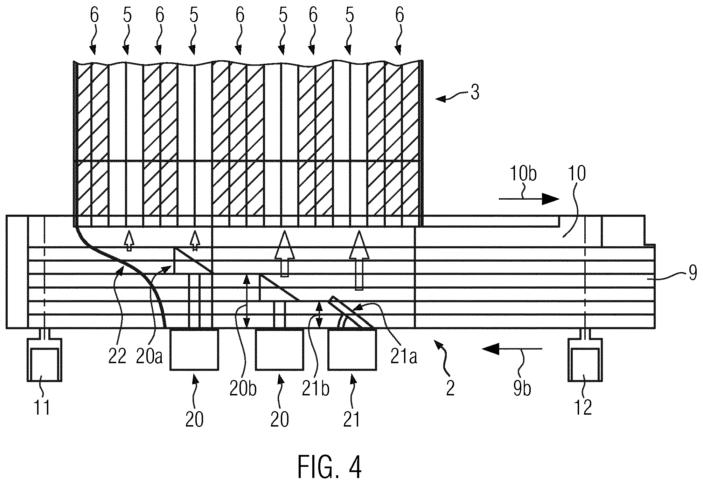

Demgegenüber umfasst der Einlaufbereich 2 bei einer vierten Ausführungsform der Niederdruck-Speichervorrichtung und/oder Verteileinheit 1 wenigstens ein aktiv angetriebenes und insbesondere elektrisch oder pneumatisch steuerbares Ablenkelement 20, 21. In der Figur 4 sind beispielhaft zwei aktive Ablenkelemente 20 mit linear beweglichen Schiebern 20a, ein aktives Ablenkelement 21 mit einem seitlich schwenkbaren Hebel 21a und ein unbewegliches Ablenkelement 22 in Form eines Geländers dargestellt.

Unbewegliche Ablenkelemente 13, 14, 17, 22 sind prinzipiell mit aktiven Ablenkelementen 20, 21 kombinierbar. Generell sind alle Kombinationen der genannten Alternativen denkbar. Bevorzugt werden unbewegliche Ablenkelemente 13, 14, 17, 22 und aktive Ablenkelemente 20, 21 alternierend angeordnet.

Auch die aktiven Ablenkelemente 20, 21 bewirken ein selektives Ablenken der zugeförderten Behälter in Richtung der Durchlaufbänder 5. Hierbei ist die Gestalt der Schieber 20a und des schwenkbaren Hebels 21a lediglich beispielhaft dargestellt. Insbesondere könnten Schieber 20a und/oder schwenkbare Hebel 21a und/oder unbewegliche Ablenkelemente 13, 14, 17, 22 in Zuförderrichtung 9b im Wesentlichen lückenlos aneinandergrenzen.

Ferner können Arbeitshübe 20b, 21b der aktiven Ablenkelemente 20, 21 individuell einstellbar sein. Denkbar ist auch, dass sich die Arbeitshübe 20b, 21b aus einem für alle Ablenkelemente 20, 21 einheitlichen Hub und einem für einzelne Ablenkelemente 20, 21 separat einstellbaren Ergänzungshub zusammensetzen. Dies ermöglicht eine besonders flexible Anpassung an unterschiedliche Behältertypen und/oder Produktionsbedingungen.

Die Figur 5 verdeutlicht in Förderrichtung 9b gesehen, dass das in Laufrichtung 10b gegenläufig angetriebene Transferband 10 auf seiner den Durchlaufbändern 5 und den Speicherbändern 6 zugewandten Seite als sogenannte Freeflow-Kette oder dergleichen ausgebildet ist. Darunter ist zu verstehen, dass das Transferband 10 in einem stirnseitigen Umkehrbereich 5b der Durchlaufbänder 5 mit den Durchlaufbändern 5 vertikal überlappt und mit dem Speichertisch 3 einen im Wesentlichen fluchtenden Überschub 23 für die Behälter B ausbildet.

Zu diesem Zweck sind an dem Transportband 10 beispielsweise seitliche Platten 10c ausgebildet, die auf ihrer Unterseite nach außen hin verjüngend ausgebildet sind. Beispielsweise können die Platten 10c auf ihrer Unterseite geradlinig oder gekrümmt an einen Krümmungsradius R der Durchlaufbänder 5 und der Speicherbänder 6 im Umkehrbereich 5b angepasst sein. Dies ist in der Figur 5 schematisch angedeutet. Dies ermöglicht einen störungsfreien Überschub - mit minimalem Spalt in der horizontalen Ebene - der Behälter B von dem Zuförderband 9 über das Transferband 10 bis auf die Durchlaufbänder 5.

Die Durchlaufgeschwindigkeit 5a und die Speichergeschwindigkeit 6a lassen sich an die Produktionsbedingungen anpassen und werden insbesondere beim Einspeichern von Behältern B, im Normalbetrieb, also beim Durchlauf der Behälter B, und beim Ausspeichern der Behälter B paarweise auf jeweils separat zugeordnete Werte eingestellt. Ebenso können die Zufördergeschwindigkeit 9a und die Gegenlaufgeschwindigkeit 10a variabel eingestellt werden, um die Beschickung der Durchlaufbänder 5 je nach Betriebszustand gezielt anzupassen.

Vorzugsweise hängt die Durchlaufgeschwindigkeit 5a von einer stromaufwärts gelegenen Versorgungssituation mit Behältern und/oder einer Ausbringungsmenge einer stromaufwärtsgelegenen Maschine ab. Die Speichergeschwindigkeit 6a hängt vorzugsweise von einer stromabwärts gelegenen Versorgungssituation mit Behältern und/oder einer Verarbeitungsmenge einer stromabwärtsgelegenen Maschine ab. Die Regelung erfolgt vorzugsweise über eine sogenannte Durchsatzregulierung und/oder über Lichtschranken und andere Sensoren. Beispielsweise können die Speicherbänder 6 bei Bedarf angehalten werden oder bei einem Behälterstau mit reduzierter Speichergeschwindigkeit 6a angetrieben werden.

Somit lässt sich bei der Niederdruck-Speichervorrichtung und/oder Verteileinheit 1 sowohl die Fördergeschwindigkeit des Speichertisches 3 insgesamt an die jeweiligen Produktionsbedingungen anpassen als auch die Verteilung der Behälter B auf die einzelnen Durchlaufbänder 5 und Speicherbänder 6.

Vorzugsweise gilt im Normalbetrieb (Speichern): Die Speichergeschwindigkeit 6a ist kleiner als die oder gleich der Durchlaufgeschwindigkeit 5a. Vorzugsweise gilt im Auslagerbetrieb (Entspeichern): Die Speichergeschwindigkeit 6a ist gleich der Durchlaufgeschwindigkeit 5a.

Die Produktionsbedingungen und damit der Betriebszustand der Niederdruck-Speichervorrichtung und/oder Verteileinheit 1 sind beispielsweise durch Behandlungsmaschinen stromaufwärts und/oder stromabwärts vorgegeben. Die Produktionsbedingungen können sich beispielsweise durch unterschiedliche Verarbeitungsgeschwindigkeiten in den Behandlungsmaschinen stromaufwärts beziehungsweise stromabwärts der Niederdruck-Speichervorrichtung und/oder Verteileinheit 1 ändern. Beispielsweise kann ein Produktionsstillstand stromabwärts ein Einspeichern von Behältern B auslösen. Entsprechend kann das Ausmaß der Füllung der Niederdruck-Speichervorrichtung und/oder Verteileinheit 1 mit Behältern B bei einem Produktionsstillstand stromaufwärts der Niederdruck-Speichervorrichtung und/oder Verteileinheit 1 verringert werden im Sinne eines Ausspeicherns der Behälter B.

Zudem kann die Zufördergeschwindigkeit 9a des Zuförderbands 9 mittels stromaufwärts der Ablenkelemente 13, 14, 17, 20, 21, 22 ausgebildeten Stauschaltern (nicht gezeigt) gesteuert werden und/oder das Zuförderband 9 ein-/ ausgeschaltet werden. Es sind dann beispielsweise wenigstens zwei Stauschalter entlang des Zuförderbands 9 oder stromaufwärts noch vor dem Zuförderband 9 auf einem vorgelagerten Förderer im Abstand zueinander angeordnet. Beispielsweise beginnt das Zufördern von Behältern B erst, wenn ein erster weiter stromaufwärts gelegener Stauschalter durch einen Rückstau von Behältern B ausgelöst wird. Die Behälter werden dann vorzugsweise solange zugefördert, bis ein zweiter weiter stromabwärts gelegener Stauschalter nicht mehr von Behältern B ausgelöst wird. Vorteilhaft ergibt sich dadurch ein immer auf gleiche Weise gefülltes Zuförderband 9, das einen immer gleichen Belegungszustand zur kontrollierten Beschickung der erfindungsgemäßen Vorrichtung garantiert.

Insbesondere im Zusammenwirken von Ablenkelementen 13, 14, 17, 20, 21, 22 mit einem stirnseitig am Speichertisch 3 gegenläufig zu Zuförderrichtung 9b laufenden Transferband 10 lässt sich eine flexible und gezielte Beschickung von Durchlaufbändern 5 und somit eine selektiv steuerbare Beschickung des Speichertisches 3 bewirken.

Die Behälter B sind beispielsweise Flaschen, insbesondere solche aus Kunststoff.

Die Behälter werden im Normalbetrieb kontinuierlich als ungeordneter Produktstrom in den Einlaufbereich 2 gefördert. Die Durchlaufbänder 5 und vorzugsweise auch die Speicherbänder 6 laufen im Normalbetrieb kontinuierlich. Die Behälter B werden im Auslaufbereich 4 auf an sich bekannte Weise von einem Ablenkelement 24 auf ein im Normalbetrieb kontinuierlich arbeitendes Abförderband 25 geleitet und von letzterem abtransportiert.

Die in den Figuren gezeigten Ausführungsformen können insbesondere auch so kombiniert werden, dass einzelnen Durchlaufbändern 5 unterschiedliche Typen von Ablenkelementen 13, 14, 17, 20, 21, 22 zugeordnet sind.

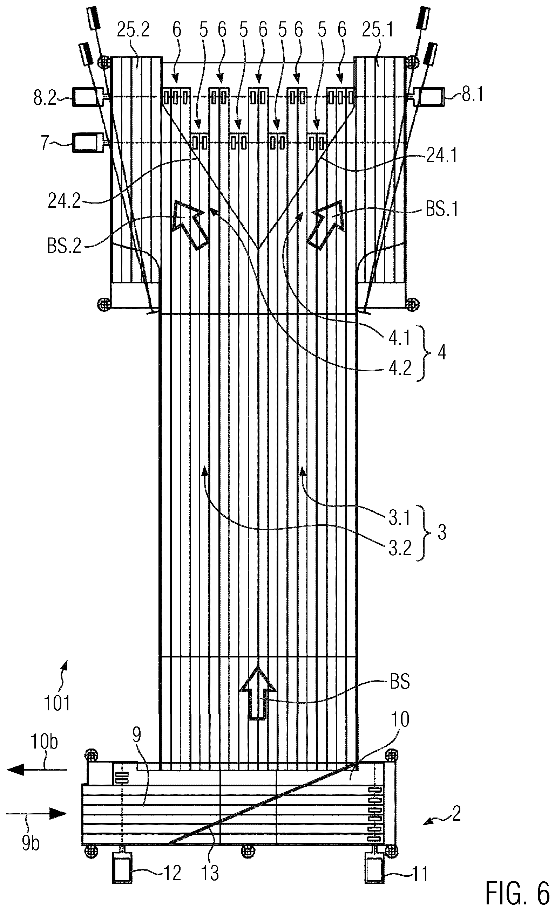

In den Figuren 6 bis 9 sind Niederdruckspeichervorrichtungen und/oder Verteileinheiten 101, 102, 103, 104 gemäß weiterer bevorzugter Ausführungsformen dargestellt, die sich von der ersten Ausführungsform insbesondere dadurch unterscheiden, dass der Auslaufbereich 4 wenigstens zwei Behälterauslässe 4.1, 4.2, 4.3 umfasst, durch die die Behälter B die Niederdruck-Speichervorrichtung und/oder Verteileinheit als voneinander getrennte Behälterströme BS.1, BS.2, BS.3 verlassen. Die Zuförderrichtung 9b und die Laufrichtung 10b des Transferbands 10 sind in den Figuren 6 bis 9 ebenso beispielhaft angedeutet.

Ferner umfasst der Speichertisch 3 dann den Behälterauslässen 4.1, 4.2, 4.3 zugeordnete Speicherbereiche 3.1, 3.2, 3.3 und ausgangsseitige Ablenkelemente 24.1, 24.2, 24.3, um einen einlaufenden Behälterstrom BS auf auslaufenden Behälterströme BS.1, BS.2, BS.3 aufzuteilen.

Wie die Figur 6 erkennen lässt, umfasst auch die Niederdruck-Speichervorrichtung und/oder Verteileinheit 101 gemäß einer fünften Ausführungsform einen Einlaufbereich 2, einen Speichertisch 3 und einen Auslaufbereich 4. Der Speichertisch 3 umfasst ebenso Durchlaufbänder 5 und Speicherbänder 6. Die Durchlaufbänder 5 und die Speicherbänder 6 sind vorzugsweise derart nebeneinander ausgebildet, dass jedes Durchlaufband 5 beidseitig von einem Speicherband 6 flankiert ist.

Allerdings ist der Auslaufbereich 4 in einen ersten Auslass 4.1 für einen ersten ausgangsseitigen Behälterstrom BS.1 und einen zweiten Auslass 4.2 für einen zweiten ausgangsseitigen Behälterstrom BS.2 aufgeteilt.

Für die Durchlaufbänder 5 ist ein gemeinsamer Antriebsmotor 7 vorhanden, für die Speicherbänder 6 ein erster Antriebsmotor 8.1 für einen ersten Speicherbereich 3.1 des Speichertisches 3 und zweiter Antriebsmotor 8.2 für einen zweiten Speicherbereich 3.2. Die Antriebsmotoren 8.1 und 8.2 sind getrennt steuerbar entsprechend den auszuleitenden Behälterströmen BS.1 und BS.2.

Bei der Niederdruck-Speichervorrichtung und/oder Verteileinheit 101 sind die Speicherbereiche 3.1 und 3.2 sowie ausgangsseitige Ablenkelemente 24.1 und 24.2 in Form von Geländern oder dergleichen vorzugsweise in Längsrichtung achsensymmetrisch ausgebildet, um den einlaufenden Behälterstrom BS zu gleichen Anteilen auf die auslaufenden Behälterströme BS.1 und BS.2 aufzuteilen. Alternativ kann der Behälterstrom BS je nach der Produktionsgeschwindigkeit der stromabwärts gelegenen Maschinen unterschiedlich durch die Speicherbänder aufgeteilt werden. Je nach Bedarf werden die Geschwindigkeiten variiert, und es wird bevorzugt am Einlauf durch eine gezielte Stellung der eingangsseitigen Ablenkelemente 13, 14, 17, 20, 21 und/oder 22 der entsprechende Speicherbereich angefahren. Die ausgangsseitigen Ablenkelemente 24.1 und 24.2 können beispielsweise aus einem einzigen entsprechend geformten Geländer bestehen oder mehrteilig ausgebildet sein.

Der Einlaufbereich 2 umfasst, wie voranstehend beschrieben, eine Zuförderband 9 mit einem Antriebsmotor 11 und ein gegenläufiges Transferband 10 mit einem Antriebsmotor 12. Ebenso ist wenigstens ein Ablenkelement 13 (dargestellt), 14, 17, 20, 21 und/oder 22 (jeweils nicht dargestellt) ausgebildet. Ebenso können optionale Stauschalter 3d, Abweiselemente 3b, 3c oder dergleichen am Übergang zum Speichertisch 3 vorhanden sein.

Der Einlaufbereich 2 der Niederdruck-Speichervorrichtung und/oder Verteileinheit 101 hat vorzugsweise dieselbe Funktion wie der Einlaufbereich 2 der Niederdruck-Speichervorrichtung und/oder Verteileinheit 1 der ersten vier Ausführungsformen. Dies gilt, sofern nicht anders angegeben, auch für die nachfolgend beschriebenen Niederdruck-Speichervorrichtungen und/oder Verteileinheiten 102, 103 und 104.

Bei den Ausführungsformen der Figuren 6 bis 9 wären jedoch prinzipiell auch Einlaufbereiche denkbar, bei denen wenigstens eines der voranstehend beschriebenen Elemente des Einlaufbereichs 2 fehlt.

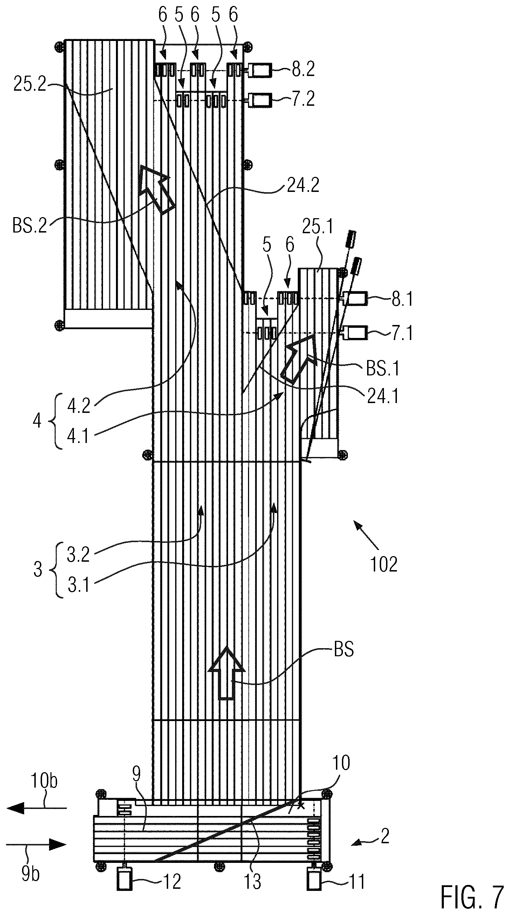

Wie die Figur 7 erkennen lässt, umfasst auch die Niederdruck-Speichervorrichtung und/oder Verteileinheit 102 gemäß einer sechsten Ausführungsform einen Einlaufbereich 2, einen Speichertisch 3 und einen Auslaufbereich 4. Der Speichertisch 3 umfasst ebenso Durchlaufbänder 5 und Speicherbänder 6. Die Durchlaufbänder 5 und die Speicherbänder 6 sind vorzugsweise derart nebeneinander ausgebildet, dass jedes Durchlaufband 5 beidseitig von einem Speicherband 6 flankiert ist.

Der Auslaufbereich 4 ist in einen ersten Auslass 4.1 für einen ersten ausgangsseitigen Behälterstrom BS.1 und einen zweiten Auslass 4.2 für einen zweiten ausgangsseitigen Behälterstrom BS.2 aufgeteilt.

Zum Antreiben der Durchlaufbänder 5 ist ein erster Antriebsmotor 7.1 für einen ersten Speicherbereich 3.1 des Speichertisches 3 und zweiter Antriebsmotor 7.2 für einen zweiten Speicherbereich 3.2 des Speichertisches 3 vorhanden. Zum Antreiben der Speicherbänder 6 ist ein erster Antriebsmotor 8.1 für den ersten Speicherbereich 3.1 und zweiter Antriebsmotor 8.2 für den zweiten Speicherbereich 3.2 vorhanden. Die Antriebsmotoren 7.1, 7.2, 8.1 und 8.2 sind vorzugsweise getrennt steuerbar in Abhängigkeit von den auszuleitenden Behälterströmen BS.1 und BS.2.

Bei der Niederdruck-Speichervorrichtung und/oder Verteileinheit 102 sind die Speicherbereiche 3.1 und 3.2 sowie ausgangsseitige Ablenkelemente 24.1 und 24.2 in Form von Geländern oder dergleichen vorzugsweise in Längsrichtung unsymmetrisch ausgebildet, um den einlaufenden Behälterstrom BS unter normalen Produktionsbedingungen zu ungleichen Anteilen auf die auslaufenden Behälterströme BS.1 und BS.2 aufzuteilen, beispielsweise im Verhältnis 1:2. Alternativ, je nach der Produktionsgeschwindigkeit der stromabwärts gelegenen Maschinen, kann der Behälterstrom BS unterschiedlich durch die Speicherbänder aufgeteilt werden. Je nach Bedarf werden die Geschwindigkeiten variiert, und es wird bevorzugt am Einlauf durch eine gezielte Stellung der eingangsseitigen Ablenkelemente 13, 14, 17, 20, 21 und/oder 22 der entsprechende Speicherbereich angefahren.

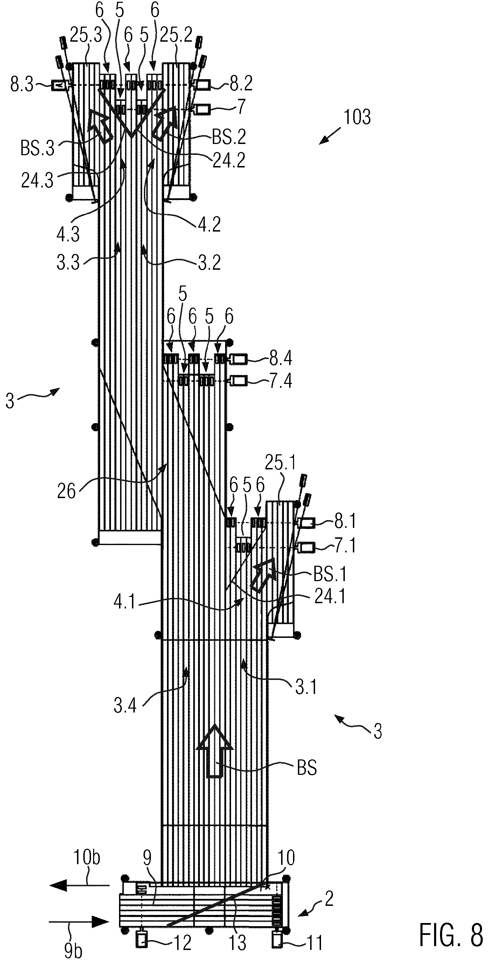

Wie die Figur 8 erkennen lässt, umfasst auch die Niederdruck-Speichervorrichtung und/oder Verteileinheit 103 gemäß einer siebten Ausführungsform einen Einlaufbereich 2, einen Speichertisch 3 und einen Auslaufbereich 4. Der Speichertisch 3 umfasst ebenso Durchlaufbänder 5 und Speicherbänder 6. Die Durchlaufbänder 5 und die Speicherbänder 6 sind vorzugsweise derart nebeneinander ausgebildet, dass jedes Durchlaufband 5 beidseitig von einem Speicherband 6 flankiert ist.

Allerdings ist der Auslaufbereich 4 in einen ersten Auslass 4.1 für einen ersten ausgangsseitigen Behälterstrom BS.1, einen zweiten Auslass 4.2 für einen zweiten ausgangsseitigen Behälterstrom BS.2 und einen dritten Auslass 4.3 für einen dritten ausgangsseitigen Behälterstrom BS.3 aufgeteilt.

Für die Durchlaufbänder 5 eines ersten Speicherbereichs 3.1 des Speichertisches 3 ist ein erster Antriebsmotor 7.1 vorhanden, für die Durchlaufbänder 5 eines zweiten Speicherbereich 3.2 und eines dritten Speicherbereichs 3.3 dagegen ein gemeinsamer Antriebsmotor 7. Für die Speicherbänder 6 ist ein erster Antriebsmotor 8.1 im ersten Speicherbereich 3.1, ein zweiter Antriebsmotor 8.2 im zweiten Speicherbereich 3.2 und ein dritter Antriebsmotor 8.3 im dritten Speicherbereich 3.3 vorhanden. Die Antriebsmotoren 7, 7.1, 8.1, 8.2 und/oder 8.3 sind vorzugsweise getrennt steuerbar in Abhängigkeit von zugehörigen Behälterströmen BS.1, BS.2 und BS.3.

Bei der Niederdruck-Speichervorrichtung und/oder Verteileinheit 103 ist die Aufteilung im Bereich des ersten Auslasses 4.1 mittels Ablenkelement 24.1 vorzugsweise unsymmetrisch ausgebildet und die Aufteilung im Bereich des zweiten und dritten Auslasses 4.2, 4.3 mittels Ablenkelementen 24.2, 24.3 vorzugsweise symmetrisch. Die Ablenkelemente 24.1, 24.2 und 24.3 sind beispielsweise Geländer oder dergleichen.

Beispielsweise wird der einlaufende Behälterstrom BS dadurch insgesamt zu gleichen Anteilen auf die auslaufenden Behälterströme BS.1, BS.2 und BS.3 aufgeteilt, also im Verhältnis 1:1:1, Alternativ, je nach der Produktionsgeschwindigkeit der stromabwärts gelegenen Maschinen, kann der Behälterstrom BS unterschiedlich durch die Speicherbänder aufgeteilt werden. Je nach Bedarf werden die Geschwindigkeiten der Speicherbänder variiert, und es wird bevorzugt am Einlauf durch eine gezielte Stellung der eingangsseitigen Ablenkelemente 13, 14, 17, 20, 21 und/oder 22 der entsprechende Speicherbereich angefahren.

Zusätzlich ist ein Behälterüberschub 26 vorhanden, an dem die Behälterströme BS.2 und BS.3 gemeinsam von einem Speicherbereich 3.4 mit Antriebsmotoren 7.4 und 8.4 für die Durchlaufbänder 5 bzw. Speicherbänder 6 eines eingangsseitigen Speicherbereichs 3.4 in die Speicherbereiche 3.2 und 3.3 geleitet werden.

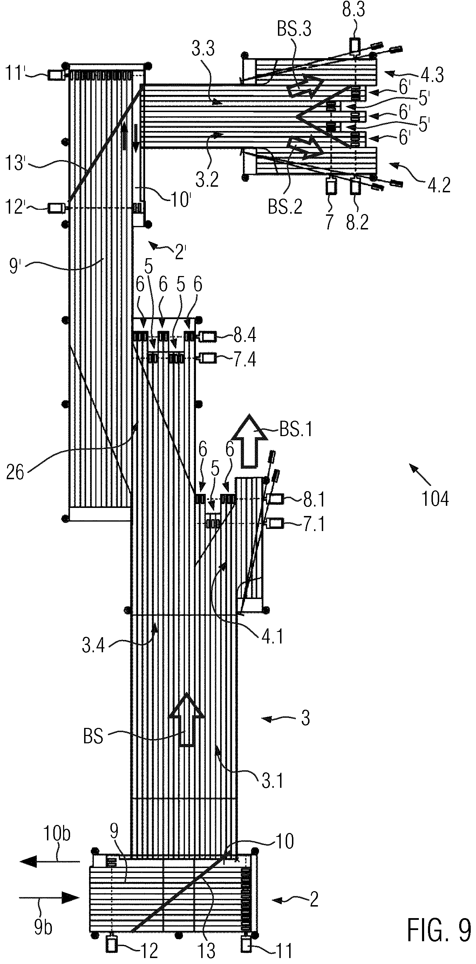

Wie die Figur 9 erkennen lässt, entspricht die Niederdruck-Speichervorrichtung und/oder Verteileinheit 104 gemäß einer siebten Ausführungsform funktional der voranstehend beschriebenen Niederdruck-Speichervorrichtung und/oder Verteileinheit 103 mit der Ausnahme, dass zwischen dem eingangsseitigen Speicherbereich 3.4 und den Speicherbereichen 3.2 und 3.3, bzw. zwischen dem ersten Auslass 4.1 und den nachfolgenden Auslässen 4.2 und 4.3, zusätzlich ein dem Einlaufbereich 2 funktional entsprechender Zwischenbereich 2' mit einem Förderband 9', einem gegenläufigen Transferband 10', zugeordneten Antriebsmotoren 11', 12' und einem Ablenkelement 13' seriell eingefügt ist.

Das heißt, die Behälterströme BS.2 und BS.3 werden von dem eingangsseitigen Speicherbereich 3.4 zuerst auf das Förderband 9' übergeschoben und dann auf die gleiche Weise an die Speicherbereiche 3.2 und 3.3 übergeben, wie dies voranstehend für den Übergang zwischen dem Einlaufbereich 2 und dem Speichertisch 3 der Niederdruck-Speichervorrichtung und/oder Verteileinheit 1 unter Bezugnahme auf die Figuren 1 bis 5 beschrieben wurde. Ebenso können unterschiedliche Ablenkelemente13, 14, 17, 20, 21 und/oder 22 zum Einsatz kommen. Hinsichtlich der in der Figur 9 dargestellten Vorrichtungsbestandteile wird daher auf die Beschreibung der Niederdruck-Speichervorrichtungen und/oder Verteileinheiten 1 und 103 verwiesen.

Der zusätzliche Zwischenbereich 2' mit gegenläufigem Freeflow-Transferband 10' und Ablenkelement 13' ermöglicht eine besonders effektive Kontrolle der Niederdruckbedingungen unter gezielter Aufteilung des Behälterstroms BS.

## Patentansprüche

1. Niederdruck-Speichervorrichtung und/oder Verteileinheit (1, 101, 102, 103, 104) für Behälter (B), insbesondere Flaschen, umfassend:
- einen Speichertisch (3) mit Durchlaufbändern (5) zum Fördern der Behälter durch den Speichertisch und mit Speicherbändern (6), die beidseitig entlang der Durchlaufbänder verlaufen und langsamer antreibbar sind als die Durchlaufbänder; und
- einen Einlaufbereich (2) mit einem Zuförderband (9) für die Behälter,
wobei
das Zuförderband quer, insbesondere im rechten Winkel, zu den Durchlaufbändern und den Speicherbändern verläuft,
im Einlaufbereich wenigstens ein Ablenkelement (13, 14, 17, 20, 21, 22) zum Ablenken der Behälter vom Zuförderband in Richtung des Speichertisches, und insbesondere zum selektiven Ablenken auf die Durchlaufbänder (5), ausgebildet ist,
**dadurch gekennzeichnet, dass**
zwischen Zuförderband und Speichertisch ein zum Zuförderband gegenläufiges Transferband (10) ausgebildet ist, über welches die Behälter von dem wenigstens einen Ablenkelement (13, 14, 17, 20, 21, 22) auf den Speichertisch abgelenkt werden.

2. Niederdruck-Speichervorrichtung und/oder Verteileinheit nach Anspruch 1, wobei ein/das Transferband (10) derart ausgebildet ist, dass es in einem Umkehrbereich (5b) der Durchlaufbänder (5) und Speicherbänder (6) über die Durchlaufbänder (5) und Speicherbänder (6) übergreift und mit dem Speichertisch (3) einen fluchtenden Überschub (23) ausbildet.

3. Niederdruck-Speichervorrichtung und/oder Verteileinheit nach Anspruch 1 oder 2, wobei das Ablenkelement (13, 14, 17, 22) als Geländer ausgebildet ist, das in Zuförderrichtung (9b) schräg zum Speichertisch (3) hin verläuft.

4. Niederdruck-Speichervorrichtung und/oder Verteileinheit nach einem der vorigen Ansprüche, wobei das Ablenkelement (14, 17) als Geländer ausgebildet ist, das abwechselnd in Ablenkabschnitte (15, 18) und davon abweichend ausgerichtete Leitabschnitte (16, 19) derart unterteilt ist, dass die Ablenkabschnitte daran entlang laufende Behälter (B) in Richtung der Durchlaufbänder (5) ablenken und die Leitabschnitte daran entlang laufende Behälter an den Speicherbändern (6) vorbeileiten.

5. Niederdruck-Speichervorrichtung und/oder Verteileinheit nach Anspruch 4, wobei die Ablenkabschnitte (15) seitliche Ablenkflächen aufweisen, die mit der Zuförderrichtung (9b) einen größeren spitzen Winkel (15a) einschließen als die Leitabschnitte (16).

6. Niederdruck-Speichervorrichtung und/oder Verteileinheit nach Anspruch 4 oder 5, wobei sich die Ablenkanschnitte (15) und Leitabschnitte (16) stufenförmig abwechseln.

7. Niederdruck-Speichervorrichtung und/oder Verteileinheit nach einem der Ansprüche 4 bis 5, wobei sich die Ablenkanschnitte (18) und Leitabschnitte (19) wellenförmig abwechseln.

8. Niederdruck-Speichervorrichtung und/oder Verteileinheit nach wenigstens einem der vorigen Ansprüche, wobei im Einlaufbereich (2) wenigstens ein aktiv angetriebenes und insbesondere elektrisch oder pneumatisch steuerbares Ablenkelement (20, 21) ausgebildet ist, das einem der Durchlaufbänder (5) zugeordnet ist, und mit dem sich die Behälter (B) selektiv vom Zuförderband (9) auf das zugeordnete Durchlaufband (5) zu schieben lassen.

9. Niederdruck-Speichervorrichtung und/oder Verteileinheit nach Anspruch 8, wobei im Einlaufbereich (2) wenigstens zwei aktiv angetriebene und insbesondere elektrisch steuerbare Ablenkelemente (20, 21) unterschiedlichen Durchlaufbändern (5) zugeordnet sind, und wobei Arbeitshübe (20b, 21b) der Ablenkelemente individuell einstellbar sind.

10. Niederdruck-Speichervorrichtung und/oder Verteileinheit nach wenigstens einem der vorigen Ansprüche, wobei je ein gemeinsamer Antriebsmotor (7, 8) für die Durchlaufbänder (5) und die Speicherbänder (6) vorhanden ist.

11. Niederdruck-Speichervorrichtung und/oder Verteileinheit nach wenigstens einem der vorigen Ansprüche, ferner umfassend einen Auslaufbereich (4) für die Behälter, der wenigstens zwei Auslässe (4.1, 4.2, 4.3) umfasst, durch die sich die Behälter als voneinander getrennte Behälterströme (BS.1, BS.2, BS.3) aus der Niederdruck-Speichervorrichtung und/oder Verteileinheit abtransportieren lassen.

12. Niederdruck-Speichervorrichtung und/oder Verteileinheit nach Anspruch 11, wobei der Speichertisch (3) den Auslässen (4.1, 4.2, 4.3) zugeordnete Speicherbereiche (3.1, 3.2, 3.3) mit jeweils wenigstens einem Durchlaufband (5) und Speicherbändern (6) umfasst sowie wenigstens ein Ablenkelement (24.1, 24.2, 24.3) zum Aufteilen eines einlaufenden Behälterstroms (BS) auf auslaufende Behälterströme (BS.1, BS.2, BS.3).

13. Niederdruck-Speichervorrichtung und/oder Verteileinheit nach Anspruch 11 oder 12, wobei für jeden Auslass (4.1, 4.2, 4.3) wenigstens ein separater Antriebsmotor (8.1, 8.2, 8.3) zum Antreiben der dem Auslass jeweils zugeordneten Speicherbänder (6) ausgebildet ist.

14. Niederdruck-Speichervorrichtung und/oder Verteileinheit nach einem der Ansprüche 11 bis 12, wobei für wenigstens zwei Auslässe (4.1, 4.2, 4.3) ein gemeinsamer Antriebsmotor (7) zum Antreiben der den Auslässen jeweils zugeordneten Durchlaufbänder (5) ausgebildet ist.

15. Niederdruck-Speichervorrichtung und/oder Verteileinheit nach einem der Ansprüche 11 bis 14, wobei zwischen wenigstens zwei der Auslässe (4.1, 4.2, 4.3) ein Förderband (9') insbesondere mittels eines Behälterüberschubs (26) zwischengeschaltet ist, und das Förderband (9') quer, insbesondere im rechten Winkel, zu stromabwärts davon angeordneten Durchlaufbändern (5') und Speicherbändern (6') verläuft,
wobei zwischen dem Förderband (9') und den stromabwärts angeordneten Durchlaufbändern (5') / Speicherbändern (6') ein zum Förderband (9') gegenläufiges Transferband (10') ausgebildet ist, und
wenigstens ein Ablenkelement (13, 14, 17, 20, 21, 22) zum insbesondere selektiven Ablenken der Behälter (B) vom Förderband (9') auf die stromabwärts angeordneten Durchlaufbänder (5') ausgebildet ist.

16. Niederdruck-Speichervorrichtung und/oder Verteileinheit nach wenigstens einem der vorigen Ansprüche, wobei der Speichertisch (3) wenigstens drei Durchlaufbänder (5) umfasst sind sowie Speicherbänder (6) zwischen den Durchlaufbändern und seitlich außerhalb der Durchlaufbänder.

17. Niederdruck-Speichervorrichtung und/oder Verteileinheit nach wenigstens einem der vorigen Ansprüche, wobei die Durchlaufgeschwindigkeit (5a) der Durchlaufbänder (5) und/oder die Speichergeschwindigkeit (6a) der Speicherbänder (6) variabel steuerbar sind.

18. Niederdruck-Speichervorrichtung und/oder Verteileinheit nach wenigstens einem der vorigen Ansprüche, wobei der Speichertisch (3) eingangsseitig breiter ist als das Zuförderband (9), insbesondere um einen Faktor 1,5 bis 5 oder um einen Faktor 3 bis 4.

## Claims

1. Low-pressure storage device and/or distribution unit (1, 101, 102, 103, 104) for containers (B), in particular bottles, comprising:
- a buffer table (3) including pass-through conveyors (5) for conveying the containers through the buffer table and buffer conveyors (6) running along both sides of the pass-through conveyors and allowing to be driven more slowly than the pass-through conveyors; and
- an inlet area (2) including a supplying conveyor (9) for the containers, wherein
the supplying conveyor runs transversely, in particular orthogonally, to the pass-through conveyors and the buffer conveyors,
at least one deflecting member (13, 14, 17, 20, 21, 22) in the inlet area for deflecting the containers towards the buffer table and in particular configured for selectively deflecting onto the pass-through conveyors (5), **characterized in that**
between the supplying conveyor and the buffer table a transfer conveyor (10) is provided running opposite to the supplying conveyor via which the containers from the at least one deflecting member (13, 14, 17, 20, 21, 22) are deflected onto the buffer table.

2. Low-pressure storage device and/or distribution unit according to claim 1, wherein a/the transfer conveyor (10) is configured such that in a return area (5b) of the pass-through conveyors (5) and buffer conveyors (6) it spans the pass-through conveyors (5) and the buffer conveyors (6) and defines an aligned push-over element (23) with the buffer table (3).

3. Low-pressure storage device and/or distribution unit according to claims 1 or 2, wherein the deflecting member (13, 14, 17, 22) is configured as a railing extending in the supplying direction (9b) obliquely to the buffer table (3).

4. Low-pressure storage device and/or distribution unit according to anyone of the preceding claims, wherein the deflecting member (14, 17) is configured as a railing alternately divided into deflecting segments (15, 18) and guiding segments (16, 19) aligned deviating therefrom such that the deflecting segments deflect containers (B) running therealong towards the pass-through conveyors (5) and the guiding segments guide containers running therealong past the buffer conveyors (6).

5. Low-pressure storage device and/or distribution unit according to claim 4, wherein the deflecting segments (15) include lateral deflecting surfaces that include a larger acute angle (15a) with the supplying direction (9b) than the guiding segments (16).

6. Low-pressure storage device and/or distribution unit according to claim 4 or 5, wherein the deflecting segments (15) and the guiding segments (16) alternate in step-shaped form.

7. Low-pressure storage device and/or distribution unit according to anyone of claims 4 to 5, wherein the deflecting segments (15) and the guiding segments (16) alternate in wave-shaped form.

8. Low-pressure storage device and/or distribution unit according to at least anyone of the preceding claims, wherein in the inlet area (2) at least one actively driven and in particular electrically or pneumatically controllable deflecting member (20, 21) is provided allocated to one of the pass-through conveyors (5) by which the containers (B) can be selectively pushed from the supplying conveyor (9) onto the allocated pass-through conveyor (5).

9. Low-pressure storage device and/or distribution unit according to claim 8, wherein in the inlet area (2) at least two actively driven and in particular electrically controllable deflecting members (20, 21) are allocated to various pass-through conveyors (5) and wherein working strokes (20b, 21b) of the deflecting members can be individually adjusted.

10. Low-pressure storage device and/or distribution unit according to at least anyone of the preceding claims, wherein a respective common drive motor (7, 8) is provided for each of the pass-through conveyors (5) and the buffer conveyors (6).

11. Low-pressure storage device and/or distribution unit according to at least anyone of the preceding claims, further comprising an outlet area (4) for the containers comprising at least two outlets (4.1, 4.2, 4.3) through which the containers can be conveyed from the low-pressure storage device and/or distribution unit as container streams (BS.1, BS.2, BS.3) separated from each other.

12. Low-pressure storage device and/or distribution unit according to claim 11, wherein the buffer table (3) comprises buffer areas (3.1, 3.2, 3.3) allocated to the outlets (4.1, 4.2, 4.3) each having at least one pass-through conveyor (5) and buffer conveyors (6) and at least one deflecting member (24.1, 24.2, 24.3) for distributing an incoming container stream (BS) to outgoing container streams (BS.1, BS.2, BS.3).

13. Low-pressure storage device and/or distribution unit according to claims 11 or 12, wherein for each outlet (4.1, 4.2, 4.3) at least one separate drive motor (8.1, 8.2, 8.3) is configured for driving the buffer conveyors (6) respectively allocated to the outlet.

14. Low-pressure storage device and/or distribution unit according to anyone of claims 11 to 12, wherein for at least two outlets (4.1, 4.2, 4.3) a common drive motor (7) is configured for driving the pass-through conveyors (5) respectively allocated to the outlets.

15. Low-pressure storage device and/or distribution unit according to anyone of claims 11 to 14, wherein between at least two of the outlets (4.1, 4.2, 4.3) a conveyor belt (9') is interposed by means of a container push-over element (26) and the conveyor belt (9') runs transversely, in particular orthogonally, to pass-through conveyors (5') and buffer conveyors (6') positioned downstream therefrom,
wherein between the conveyor belt (9') and the pass-through conveyors (5')/buffer conveyors (6') positioned downstream a transfer conveyor (10') is formed running opposite to the conveyor belt (9'), and
at least one deflecting member (13, 14, 17, 20, 21, 22) is formed, in particular for selectively deflecting the containers (B) from the conveyor belt (9') onto the pass-through conveyors (5') positioned downstream.

16. Low-pressure storage device and/or distribution unit according to at least anyone of the preceding claims, wherein the buffer table (3) comprises at least three pass-through conveyors (5) and buffer conveyors (6) between the pass-through conveyors and laterally outside the pass-through conveyors.

17. Low-pressure storage device and/or distribution unit according to at least anyone of the preceding claims, wherein the passing-through speed (5a) of the pass-through conveyors (5) and/or the buffering speed (6a) of the buffer conveyors (6) can be controlled variably.

18. Low-pressure storage device and/or distribution unit according to at least one of the preceding claims, wherein the buffer table (3) is wider than the supplying conveyor (9) at its entrance side, in particular by a factor between 1,5 and 5 or by a factor between 3 and 4.

## Revendications

1. Dispositif de stockage à basse pression et/ou unité de distribution (1, 101, 102, 103, 104) pour des récipients (B), en particulier des bouteilles, comprenant :
- une table de stockage (3) avec des bandes transporteuses (5) permettant de transporter les récipients à travers la table de stockage et avec des bandes de stockage (6) qui s'étendent des deux côtés le long des bandes transporteuses et qui peuvent être entraînées plus lentement que les bandes transporteuses ; et
- une zone d'entrée (2) avec une bande d'alimentation (9) pour les récipients,
dans lequel :
la bande d'alimentation s'étend transversalement, en particulier à angle droit, par rapport aux bandes transporteuses et aux bandes de stockage,
au moins un élément de déviation (13, 14, 17, 20, 21, 22) est formé dans la zone d'entrée afin de dévier les récipients depuis la bande d'alimentation en direction de la table de stockage, et en particulier pour les dévier de manière sélective vers les bandes transporteuses (5),
**caractérisé en ce que**
une bande de transfert (10) en sens inverse de la bande d'alimentation, et par l'intermédiaire de laquelle les récipients sont déviés vers la table de stockage par le au moins un élément de déviation (13, 14, 17, 20, 21, 22), est formée entre la bande d'alimentation et la table de stockage.

2. Dispositif de stockage à basse pression et/ou unité de distribution selon la revendication 1, dans lequel une/la bande de transfert (10) est formée de telle manière qu'elle s'étend sur les bandes transporteuses (5) et les bandes de stockage (6) dans une zone d'inversion (5b) des bandes transporteuses (5) et des bandes de stockage (6) et forme un chevauchement aligné (23) avec la table de stockage (3).

3. Dispositif de stockage à basse pression et/ou unité de distribution selon la revendication 1 ou 2, dans lequel l'élément de déviation (13, 14, 17, 22) est réalisé sous la forme d'une rambarde qui s'étend obliquement par rapport à la table de stockage (3) dans la direction d'alimentation (9b).

4. Dispositif de stockage à basse pression et/ou unité de distribution selon l'une quelconque des revendications précédentes, dans lequel l'élément de déviation (14, 17) est réalisé sous la forme d'une rambarde qui est divisée de manière alternée en sections de déviation (15, 18) et en sections de guidage (16, 19) orientées de manière divergente, de telle manière que les sections de déviation dévient en direction des bandes transporteuses (5) les récipients (B) qui les longent et que les sections de guidage font passer devant les bandes de stockage (6) les récipients qui les longent.

5. Dispositif de stockage à basse pression et/ou unité de distribution selon la revendication 4, dans lequel les sections de déviation (15) présentent des surfaces de déviation latérales qui forment avec la direction d'alimentation (9b) un angle aigu (15a) supérieur à celui formé par les sections de guidage (16).

6. Dispositif de stockage à basse pression et/ou unité de distribution selon la revendication 4 ou 5, dans lequel les sections de déviation (15) et les sections de guidage (16) alternent en formant des décrochements.

7. Dispositif de stockage à basse pression et/ou unité de distribution selon l'une quelconque des revendications 4 à 5, dans lequel les sections de déviation (18) et les sections de guidage (19) alternent en formant des ondulations.

8. Dispositif de stockage à basse pression et/ou unité de distribution selon au moins l'une quelconque des revendications précédentes, dans lequel au moins un élément de déviation (20, 21) à entraînement actif, en particulier à commande électrique ou pneumatique, qui est associé à une des bandes transporteuses (5) et grâce auquel les récipients (B) peuvent être poussés de manière sélective depuis la bande d'alimentation (9) jusque sur la bande transporteuse (5) associée, est formé dans la zone d'entrée (2).

9. Dispositif de stockage à basse pression et/ou unité de distribution selon la revendication 8, dans lequel au moins deux éléments de déviation (20, 21) à entraînement actif et en particulier à commande électrique sont associés à des bandes transporteuses (5) différentes au sein de la zone d'entrée (2), et dans lequel les courses de travail (20b, 21b) des éléments de déviation peuvent être ajustées de manière individuelle.

10. Dispositif de stockage à basse pression et/ou unité de distribution selon au moins l'une quelconque des revendications précédentes, dans lequel respectivement un moteur d'entraînement (7, 8) commun est présent pour les bandes transporteuses (5) et les bandes de stockage (6).

11. Dispositif de stockage à basse pression et/ou unité de distribution selon au moins l'une quelconque des revendications précédentes, comprenant en outre une zone de sortie (4) destinée aux récipients et qui comprend au moins deux sorties (4.1, 4.2, 4.3) grâce auxquelles les récipients peuvent être évacués sous forme de flux de récipients (BS.1, BS.2, BS.3) séparés hors du dispositif de stockage à basse pression et/ou de l'unité de distribution.

12. Dispositif de stockage à basse pression et/ou unité de distribution selon la revendication 11, dans lequel la table de stockage (3) comprend des zones de stockage (3.1, 3.2, 3.3), qui sont associées aux sorties (4.1, 4.2, 4.3) et comprennent respectivement au moins une bande transporteuse (5) et des bandes de stockage (6), et comprend au moins un élément de déviation (24.1, 24.2, 24.3) permettant de diviser un flux entrant de récipients (BS) en des flux sortants de récipients (BS.1, BS.2, BS.3).

13. Dispositif de stockage à basse pression et/ou unité de distribution selon la revendication 11 ou 12, dans lequel au moins un moteur d'entraînement (8.1, 8.2, 8.3) séparé permettant d'entraîner les bandes de stockage (6) respectivement associées à une sortie est formé pour chaque sortie (4.1, 4.2, 4.3).

14. Dispositif de stockage à basse pression et/ou unité de distribution selon l'une quelconque des revendications 11 à 12, dans lequel un moteur d'entraînement (7) commun permettant d'entraîner les bandes transporteuses (5) respectivement associées à des sorties est formé pour au moins deux sorties (4.1, 4.2, 4.3).

15. Dispositif de stockage à basse pression et/ou unité de distribution selon l'une quelconque des revendications 11 à 14, dans lequel une bande transporteuse (9') est intercalée, en particulier au moyen d'un poussoir de récipients (26), entre au moins deux des sorties (4.1, 4.2, 4.3), et la bande transporteuse (9') s'étend transversalement, en particulier à angle droit, par rapport à des bandes transporteuses (5') et des bandes de stockage (6') agencées en aval de celle-ci,
dans lequel une bande de transfert (10') en sens inverse de la bande transporteuse (9') est formée entre la bande transporteuse (9') et les bandes transporteuses (5')/bandes de stockage (6') agencées en aval, et
au moins un élément de déviation (13, 14, 17, 20, 21, 22) est formé afin de dévier, en particulier de manière sélective, les récipients (B) depuis la bande transporteuse (9') vers les bandes transporteuses (5') agencées en aval.

16. Dispositif de stockage à basse pression et/ou unité de distribution selon au moins l'une quelconque des revendications précédentes, dans lequel la table de stockage (3) comprend au moins trois bandes transporteuses (5) ainsi que des bandes de stockage (6) situées entre les bandes transporteuses et latéralement à l'extérieur des bandes transporteuses.

17. Dispositif de stockage à basse pression et/ou unité de distribution selon au moins l'une quelconque des revendications précédentes, dans lequel la vitesse de transport (5a) des bandes transporteuses (5) et/ou la vitesse de stockage (6a) des bandes de stockage (6) peuvent être commandées de manière variable.

18. Dispositif de stockage à basse pression et/ou unité de distribution selon au moins l'une quelconque des revendications précédentes, dans lequel la table de stockage (3) est plus large du côté de l'entrée que ne l'est la bande d'alimentation (9), en particulier d'un facteur compris entre 1,5 et 5 ou d'un facteur compris entre 3 et 4.
